(19) Europäisches Patentamt
European Patent Office
Office européen des brevets

(11) Veröffentlichungsnummer : **0 508 106 A2**

(12) **EUROPÄISCHE PATENTANMELDUNG**

(21) Anmeldenummer : **92103807.1**

(51) Int. Cl.$^5$ : **B01D 15/00**

(22) Anmeldetag : **05.03.92**

(30) Priorität : **05.03.91 DE 4106984**

(43) Veröffentlichungstag der Anmeldung : **14.10.92 Patentblatt 92/42**

(84) Benannte Vertragsstaaten : **AT CH DE FR GB IT LI NL**

(71) Anmelder : **BIO-RAD LABORATORIES GmbH**
**Heidemannstrasse 164**
**W-8000 München 45 (DE)**

(72) Erfinder : **Zucker, Andreas, Dipl.-Chem.**
**Schiessstättstrasse 29**
**W-8000 München 2 (DE)**

(74) Vertreter : **Reitzner, Bruno, Dr. et al**
**Patentanwälte Dipl.-Ing. R. Splanemann Dr. B. Reitzner, Dipl.-Ing. K. Baronetzky Tal 13**
**W-8000 München 2 (DE)**

(54) **Verfahren zur Abtrennung von primäre Aminogruppen enthaltenden Spezies aus Lösungen.**

(57) Es wird ein Verfahren zur Abtrennung von primären Aminogruppen enthaltende Spezies aus Lösungen beschrieben, das dadurch gekennzeichnet ist, daß man die Spezies mit einem HS-Gruppen enthaltenden, wasserunlöslichen Träger und einem Dialdehyd der Formel

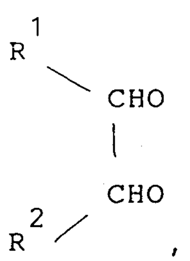
,

worin $R^1$ und $R^2$, die gleich oder voneinander verschieden sein können, Wasserstoff oder eine gegebenenfalls substituierte Kohlenwasserstoffgruppe (Hydrocarbylgruppe) darstellen, oder zusammen einen gegebenenfalls substituierten aliphatischen, aromatischen oder heterocyclischen Ring oder ein Ringsystem bilden, zu einem wasserunlöslichen Komplex der Formel

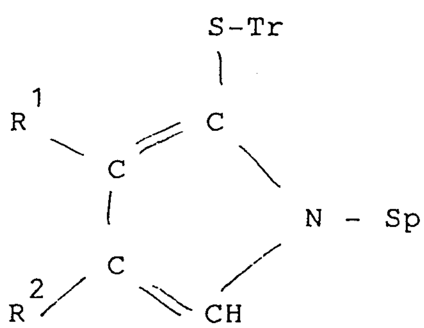
,

worin Tr den wasserunlöslichen Träger und Sp den Rest der primäre Aminogruppen enthaltenden Spezies darstellt, umsetzt, und den Komplex aus der Lösung entfernt.

Das Verfahren kann als Trennstufe bei der Bestimmung von sekundären Aminosäuren, wie Hydroxyprolinen, zur Enteiweißung von Körperflüssigkeiten, zur Keimfreimachung von wäßrigen Lösungen und zur indirekten spektroskopischen Bestimmung von primäre Aminogruppen enthaltende Spezies verwendet werden.

EP 0 508 106 A2

Die Erfindung betrifft ein Verfahren zur Abtrennung von primäre Aminogruppen enthaltenden Spezies aus Lösungen sowie verschiedene Anwendungen wiese dieses Verfahrens.

Es ist bekannt, primäre Amine und Aminosäuren sowie Proteine mit o-Phtaldialdehyl und Mercaptoethanol zu einem Isoindol-Derivat umzusetzen. Nach der Literaturstelle Analytical Biochemistry 54, 102 bis 114 (1973) wird dieses Verfahren dazu verwendet, um Peptide und Proteine nach Trennung durch Gelelektrophorese fluoreszenzanalytisch zu bestimmen. Durch die Verwendung von Mercaptoethanol wird eine Erhöhung der Fluoreszenzintensität erhalten. Eine quantitative Abtrennung von primäre Aminogruppen enthaltenden Spezies wird durch dieses Verfahren nicht bezweckt und auch nicht erreicht.

Der Erfindung liegt die Aufgabe zugrunde, ein einfaches Verfahren zur Abtrennung von primäre Aminogruppen enthaltenden Spezies aus Lösungen bereitzustellen, da diese Spezies häufig bei der Bestimmung anderer Spezies, z.B. von sekundären Aminosäuren, stören.

Zur Lösung dieser Aufgabe wird erfindungsgemäß vorgeschlagen, daß man die primäre Aminogruppen enthaltende Spezies mit einem HS-Gruppen enthaltenden, wasserunlöslichen Träger und einem Dialdehyd der Formel

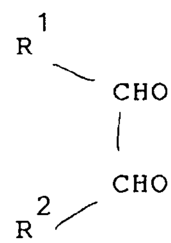

,

worin $R^1$ und $R^2$, die gleich oder voneinander verschieden sein können, Wasserstoff oder eine gegebenenfalls substituierte Kohlenwasserstoffgruppe (Hydrocarbylgruppe) darstellen, oder zusammen einen gegebenfalls substituierten aliphatischen, aromatischen oder heterocyclischen Ring oder ein Ringsystem bilden, zu einem wasserunlöslichen Komplex der Formel

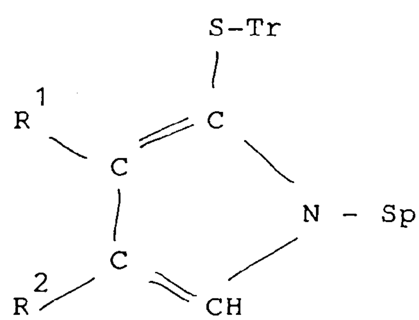

,

worin Tr den wasserunlöslichen Träger und Sp den Rest der primäre Aminogruppen enthaltenden Spezies darstellt, umsetzt, und den Komplex aus der Lösung entfernt.

Das erfindungsgemäße Verfahren erlaubt es, primäre Aminogruppen enthaltende Spezies in einem Arbeitsschritt aus der zu untersuchenden Lösung zu entfernen. Dies wird durch eine spezifische chemische Reaktion erreicht, in der die primäre Aminogruppen enthaltende Spezies kovalent an den HS-Gruppen enthaltenden, wasserunlöslichen Träger gebunden und somit als wasserunlöslicher Komplex aus der Lösung entfernt wird.

Nach dem erfindungsgemäßen Verfahren können als primäre Aminogruppen enthaltende Spezies primäre Amine, primäre Aminosäuren, primäre Aminogruppen enthaltende Peptide, Proteine oder Kohlenhydrate oder Mikroorganismen (z.B. Zellen, Bakterien oder Viren) mit primären Oberflächen-Aminogruppen aus der Lösung entfernt werden.

Als HS-Gruppen enthaltende, wasserunlösliche Träger können polymere organische Vebindungen, z.B. polymere Kohlenhydrate verwendet werden, die dadurch erhältlich sind, daß man ein mit einem Oxiran aktiviertes polymeres Kohlenhydrat, wie Agarose oder Sepharose, mit Schwefelwasserstoff oder einem sauren Sulfid umsetzt. Derartige Träger wurden bereits als feste Phasen bei der Affinitätschromatgraphie zur Reinigung von Proteinen eingesetzt (vgl. Methods in Enzymology, Vol. 182, 357 bis 369 (1990)); die Proteine sind aber nicht kovalent an der festen Phase gebunden.

Weiterhin können erfindungsgemäße Träger auf der Basis einer wasserlöslichen anorganischen Substanz verwendet werden, die dadurch erhältlich sind, daß man eine freie OH-Gruppe enthaltende anorganische Substanz entweder (a) durch Behandlung mit einem Oxiran oder Siloxan aktiviert und anschließend mit Schwefelwasserstoff oder einem sauren Sulfid umsetzt oder (b) mit einem Thiosilan umsetzt. Bevorzugte anorganische wasserunlösliche Substanzen sind Kieselgele oder Aluminiumhydroxidgele. Derartige Gele sind als Zwischenprodukte bei der Synthese von chiralen Trägermaterialien für Chromatographie bekannt.

Als Dialdehyde können solche verwendet werden, in welchen die Reste $R^1$ und/oder $R^2$ durch auxochrome oder bathochrome Gruppen substituiert sind. Auf diese Weise läßt sich das Adsorptionsspektrum der erhaltenen Komplexe in den längerwelligen Bereich verschieben, so daß die Komplexe spektroskopisch analysiert werden können.

Bevorzugt verwendete Dialdehyde sind solche mit aromatischen Ringen, insbesondere o-Phthaldialdehyd oder o-Naphthodialdehyd.

Das erfindungsgemäße Verfahren kann als Trennstufe bei der Bestimmung von sekundären Aminosäuren, wie Hydroxyprolinen, verwendet werden. Bei diesen Verfahren stören primäre Aminosäuren, weshalb ihre quantitative Abtrennung vor der Durchführung der Bestimmung wünschenswert ist.

Hydroxyproline sind Bestandteile von Collagen. Bei Knochenkrebs wird das Bindegewebe um die Knochen zerstört, und man findet die Hydroxyproline im Blut und im Urin. Das erfindungsgemäße Verfahren kann also zur Diagnose von Knochenkrebs verwendet werden. Entsprechendes gilt für die Diagnose von Osteoporose, wo ebenfalls ein Abbau des Bindegewebes stattfindet. Das Verfahren ist auch für die Analyse von Lebensmitteln anwendbar. Z.B. kann der Collagengehalt von Wurstwaren bestimmt werden.

Das erfindungsgemäße Verfahren kann weiterhin zur Enteiweißung (Deproteinierung) von Flüssigkeiten, insbesondere Körperflüssigkeiten, wie Blut und Urin, oder aber auch von Getränken, wie Bier, Wein und Fruchtsäften, verwendet werden. Eiweißstoffe stören besonders bei Anwendung von Elektroden zur Elektrolytbestimmung, da die Elektroden durch die Eiweißstoffe verschmiert werden.

Weiterhin kann das erfindungsgemäße Verfahren zur Keimfreimachung und zur Entfernung von Antigenen verwendet werden.

Eine weitere Anwendung des erfindungsgemäßen Verfahrens ist die Bestimmung von primäre Aminogruppen enthaltenden Spezies in einer Lösung. Bei diesem Verfahren geht man so vor, daß man die Lösung mit einem Überschuß eines bathochrome oder auxochrome Substituenten enthaltenden Dialdehyds und dem HS-Gruppen enthaltenden, wasserunlöslichen Träger umsetzt, den erhaltenen wasserunlöslichen Komplex trennt und den nicht im Komplex gebundenen, gelösten Anteil des Dialdehyds spektroskopisch bestimmt.

Die Erfindung ist durch die nachstehenden Beispiele erläutert.

## Beispiel 1

### Herstellung eines HS-Gruppen enthaltenden Agarose-Trägers

30 g Agarose-Beads (6 % Vernetzungsgrad) werden mit Wasser gewaschen und filtriert. Das Filtrat wird in 24 ml 1 M NaOH suspendiert. Bei Raumtemperatur werden unter Rühren 0,75 ml Epichlorhydrin zugegeben. Nach 15-minütigem Rühren wird weitere 2 Stunden bei 60°C gerührt. Anschließend werden die Beads mit Wasser gewaschen, bis das Eluat einen neutralen pH-Wert hat. Danach wird dreimal mit 0,5 M Natriumphosphat (pH-Wert 6,2) gewaschen. Sofort im Anschluß daran werden die Beads abgenutscht und in 30 ml 2 M Natriumthiosulfat gegeben. Nach sechsstündigem Rühren bei Raumtemperatur wird mit 4 ml Dithiothreitol (8 mg/ml) in 1 mM EDTA versetzt. Nach 30 Minuten wird abgenutscht. Dann wird mit verschiedenen Lösungen gewaschen; zuerst mit 300 ml 0,1 M $NaHCO_3$, 1 M NaCl, 1 mM EDTA, danach mit 300 ml 1 mM EDTA und abschließend 300 ml 10 mM Natriumacetat pH 4, 1 mM EDTA.

## Beispiel 2

### Herstellung eines HS-Gruppen enthaltenden Kieselgel-Trägers

100 g unbehandeltes Kieselgel (Fällungskieselsäure) werden mit 500 ml Toluol versetzt und zum Erreichen einer homogenen Konsistenz gerührt. Dann werden 50 g Trimethoxy-mercaptopropylsilan zugegeben und 4 Stunden am Rückfluß gekocht. Nach Abkühlen wird die überstehende Lösung dekantiert, der Niederschlag auf einer Nutsche mit Ethanol gewaschen und trocken gesaugt.

Beispiel 3

Trennung von Catecholaminen

200 µl einer wäßrigen Lösung von (1) Adrenalin, (2) Noradrenalin, (3) N-Methyldopamin und (4) Dopamin (jeweils 10 µg) werden auf eine HPLC-Säule (100 x 4,6 mm, 3 µm) aufgegeben und bei einer Temperatur von 40°C und einer Flußrate von 1,5 ml/min mit einer mobilen Phase, enthaltend 32 Vol-% $CH_3$ CN, 0,1 Vol-% Trifluoressigsäure und 68 Vol-% $H_2O$, eluiert und anschließend in einem UV-Spektrometer 254 nm detektiert. Es sind, entsprechend den vier Komponenten der Lösung, vier Signale sichtbar.

200 µl der gleichen Lösung werden mit 0,5 ml eines Boratpuffers (0,5 M, pH-Wert = 8), 1 mg o-Phthaldialdehyd und 300 mg des HS-Gruppen enthaltenden Agarose-Trägers von Beispiel 1 versetzt. Das Gemisch wird 3 Minuten geschüttelt und absitzen gelassen. Vom Überstand werden 10 µl auf die HPLC-Säule aufgebracht und, wie vorstehend angegeben, mit der mobilen Phase eluiert. Das Chromatogramm zeigt nur noch die Signale der Komponenten (1) und (3), d.h. der sekundären Amine. Die Komponenten (2) und (4), d.h. die primären Amine, erscheinen nicht mehr im Chromatogramm.

Das gleiche Ergebnis erhält man, wenn man den o-Phthaldialdehyd durch Naphthodialdehyd ersetzt.

Beispiel 4

Entfernung von primären Aminosäuren aus Urin als Vorstufe zur Hydroxyprolin-Bestimmung

200 µl Urin werden zur Hydrolyse der Proteine in einem Pyrex-Glas mit Teflon-Stopfen zusammen mit einem sauren Kationenaustauscher 1 Stunde auf 150°C erhitzt. Die Aminosäuren werden mit 250 µl Boratpuffer (0,5 M, pH-Wert = 8) in Lösung gebracht. Man läßt den Kationenaustauscher absitzen und versetzt 200 µl des Überstandes mit 20 µl einer o-Phthaldialdehydlösung und 300 mg des HS-Gruppen enthaltenden Kieselgel-Trägers von Beispiel 2. Die erhaltene Suspension wird 3 Minuten gerüttelt und anschließend zur Derivatisierung mit 100 µl Fluorenylmethyloxicarbonylchlorid (FMOC)-Lösung (2 mg/ml $CH_3$ CN) versetzt. Die Derivatisierung der Aminosäuren wird zum Zweck der spektroskopischen Analyse (Verschiebung des Absorptionsmaximums nach längeren Wellenlängen) durchgeführt.

Nach weiteren 2 Minuten im Rüttler wird die Suspension 2 Minuten bei 13 000 Upm in einer Eppendorfzentrifuge zentrifugiert.

10 µl des Überstandes werden dann wie nach Beispiel 3 auf eine HPLC-Säule aufgebracht und eluiert. Im Chromatogramm (Detektion mit UV, 254 nm) finden sich nur noch die sekundären Aminosäuren.

Zur quantitativen Bestimmung des trans-4-Hydroxyprolins kann man als internen Standard eine bekannte Menge einer Aminosäure mit sekundären Aminogruppen, z.B. N-Methyltaurin mitlaufen lassen.

Beispiel 5

Bestimmung von Hydroxyprolin in collagenhaltiger Wurst

Etwa 4 g einer gut homogenisierten Leberwurstprobe werden auf 1 mg genau in einen 100-ml-Rund- oder Erlenmeyerkolben eingewogen. Es werden 30 ml Salzsäure hinzugefügt, und die Lösung wird bis zum schwachen Sieden erhitzt und 6 h unter Rückfluß gekocht.

Das Hydrolysat wird quantitativ mit Wasser in einen 500 ml-Meßkolben überführt, mit etwa 5 ml Petroleumbenzin versetzt und mit Wasser so bis zur Marke aufgefüllt, daß die Petroleumbenzinschicht mit dem darin gelösten Fett über der Marke liegt. Nach gründlichem Mischen wird die fetthaltige Petroleumbenzinschicht durch Absaugen entfernt und die wäßrige Phase in einen 500-ml-Erlenmeyerkolben filtriert.

Aus dem Hydrolysat wird eine geeignete Verdünnung hergestellt, so daß die erwartete Hydroxyprolinkonzentration im Bereich von 0,6 bis 2,4 µg/ml liegt. Das geschieht durch Verdünnen von 10 ml des Hydrolysats mit Wasser in einem 250-ml-Meßkolben.

Unter Verwendung von 200 µl des Hydrolysats werden die Stufen der Entfernung der primären Aminosäuren, die Derivatisierung mit FMOC und die spektroskopische Bestimmung des Hydroxyprolins nach Beispiel 4 durchgeführt.

Da Hydroxyprolin ein wesentlicher Bestandteil von Collagen ist, läßt sich auf diese Weise indirekt der Collagengehalt der Wurst bestimmen.

Beispiel 6

Bestimmung von Elektrolyten im Blut

200 µl Blut werden mit 500 µl Boratpuffer (0,5 M, pH-Wert = 8), 300 mg des HS-Gruppen enthaltenden Kieselgel-Trägers von Beispiel 2 und 1 mg o-Phthaldialdehyd versetzt. Die Suspension wird 3 Minuten gerüttelt und absitzen gelassen. Die im Blut enthaltenen Proteine sind über ihre primären $NH_2$-Gruppen kovalent an den Träger gebunden. Dies kann man bereits dadurch erkennen, daß der Träger durch die Erythrocyten rot gefärbt ist.

Der farblose Überstand ist proteinfrei (Biuret-Test negativ).

In dem Überstand werden die Alkali-Kationen ($Li^+$, $Na^+$, $K^+$) mit Hilfe einer üblichen ionensensitiven Elektrode bestimmt.

Es können etwa zweimal soviele Bestimmungen durchgeführt werden wie mit unbehandeltem Blut, bevor die Elektrode unbrauchbar wird.

Beispiel 7

Keimfreimachung von wäßrigen Lösungen

200 µl Regenwasser werden mit 1 mg o-Phthaldialdehyd und 300 mg des HS-Gruppen enthaltenden Kieselgel-Trägers von Beispiel 2 vermischt und 3 Minuten geschüttelt. Eine Probe des Überstandes wird auf einen Agar-Nährboden aufgebracht und bei 37°C im Brutschrank 2 Tage inkubiert. Es ist kein Bakterienwachstum feststellbar. Eine unbehandelte Probe des Regenwassers zeigt nach 2-tägiger Inkubation ein starkes Bakterienwachstum.

Beispiel 8

Bestimmung einer primären Aminosäure durch Differenzanalyse

Eine Lösung von 20 mg o-Naphtholdialdehyd in 1 ml einer 30 %igen Acetonitril-Lösung (Rest Wasser) wird mit 5 mg Alanin, gelöst in 1 ml Wasser sowie mit 200 mg des HS-Gruppen enthaltenden Kieselgel-Trägers von Beispiel 2 versetzt. Die Suspension wird 3 Minuten geschüttelt und 2 Minuten zentrifugiert. Die Extinktion der überstehenden Lösung wird in einem Photometer gemessen. Durch Anwendung des Lambert-Beer'schen Gesetzes läßt sich aus der Konzentrationsabnahme des Dialdehyds der Gehalt der Testlösung an Alanin berechnen.

**Patentansprüche**

1. Verfahren zur Abtrennung von primäre Aminogruppen enthaltenden Spezies aus Lösungen, dadurch gekennzeichnet, daß man die Spezies mit einem HS-Gruppen enthaltenden, wasserunlöslichen Träger und einem Dialdehyd der Formel

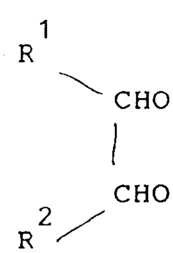

,

worin $R^1$ und $R^2$, die gleich oder voneinander verschieden sein können, Wasserstoff oder eine gegebenenfalls substituierte Kohlenwasserstoffgruppe (Hydrocarbylgruppe) darstellen, oder zusammen einen gegebenenfalls substituierten aliphatischen, aromatischen oder heterocyclischen Ring oder ein Ringsystem bilden, zu einem wasserunlöslichen Komplex der Formel

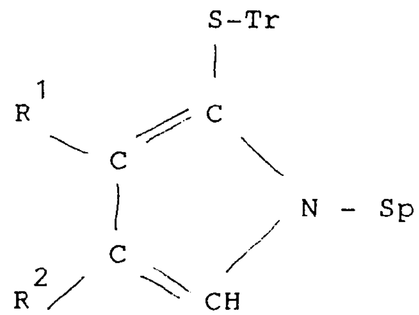

worin Tr den wasserunlöslichen Träger und Sp den Rest der primäre Aminogruppen enthaltenden Spezies darstellt, umsetzt, und den Komplex aus der Lösung entfernt.

2. Verfahren nach Anspruch 1, dadurch gekennzeichnet, daß die primäre Aminogruppen enthaltende Spezies ein primäres Amin, eine primäre Aminosäure, ein primäre Aminogruppen enthaltendes Peptid, Protein oder Kohlenhydrat oder einen Mikroorganismus mit primären Oberflächen-Aminogruppen darstellt.

3. Verfahren nach Anspruch 1 oder 2, dadurch gekennzeichnet, daß man einen Träger auf der Basis polymerer Kohlenhydrate verwendet, der dadurch erhältlich ist, daß man ein mit einem Oxiran aktiviertes polymeres Kohlenhydrat, wie Agarose oder Sepharose mit Schwefelwasserstoff oder einem sauren Sulfid umsetzt.

4. Verfahren nach Anspruch 1 oder 2, dadurch gekennzeichnet, daß man einen Träger auf der Basis einer wasserunlöslichen anorganischen Substanz verwendet, der dadurch erhältlich ist, daß man eine freie OH-Gruppen enthaltende anorganische Substanz entweder (a) durch Behandlung mit einem Oxiran oder Siloxan aktiviert und anschließend mit Schwefelwasserstoff oder einem sauren Sulfid umsetzt, oder (b) mit einem Thiosilan umsetzt.

5. Verfahren nach Anspruch 1, 2 oder 3, dadurch gekennzeichnet, daß man als freie OH-Gruppen enthaltende anorganische wasserunlösliche Substanz ein Kieselgel oder ein Aluminiumhydroxidgel verwendet.

6. Verfahren nach einem der Ansprüche 1 bis 5, dadurch gekennzeichnet, daß man einen Dialdehyd verwendet, in welchem die Reste $R^1$ und/oder $R^2$ durch auxochrome oder bathochrome Gruppen substituiert sind.

7. Verfahren nach einem der Ansprüche 1 bis 6, dadurch gekennzeichnet, daß man als Dialdehyd o-Phthaldialdehyd verwendet.

8. Anwendung des Verfahrens nach einem der Ansprüche 1 bis 7 als Trennstufe bei der Bestimmung von sekundären Aminosäuren, wie Hydroxyprolinen.

9. Anwendung des Verfahrens nach einem der Ansprüche 1 bis 7 zur Enteiweißung (Deproteinierung) von Körperflüssigkeiten, wie Blut und Urin.

10. Anwendung des Verfahrens nach einem der Ansprüche 1 bis 7 zur Keimfreimachung von wäßrigen Lösungen.

11. Anwendung des Verfahrens nach einem der Ansprüche 1 bis 7 zur Bestimmung von primäre Aminogruppen enthaltenden Spezies in einer Lösung, dadurch gekennzeichnet, daß man die Lösung mit einem Überschuß eines bathochrome oder auxochrome Substituenten enthaltenden Dialdehyds und dem HS-Gruppen enthaltenden, wasserunlöslichen Träger umsetzt, den erhaltenen wasserunlöslichen Komplex trennt und den nicht im Komplex gebundenen, gelösten Anteil des Dialdehyds spektroskopisch bestimmt.